# EUROPÄISCHE PATENTSCHRIFT

(11) **EP 3 544 766 B1**
(45) Veröffentlichungstag und Bekanntmachung des Hinweises auf die Patenterteilung: **18.10.2023**
(21) Anmeldenummer: 17808308.5
(22) Anmeldetag: 16.11.2017
(51) Int. Cl.: B23Q 17/09

(54) **WERKZEUGHALTER FÜR EIN BEARBEITUNGSWERKZEUG EINER BEARBEITUNGSMASCHINE UND MESSEINRICHTUNG**
TOOL HOLDER FOR A MACHINING TOOL OF A MACHINE TOOL, AND MEASURING DEVICE
PORTE-OUTIL POUR OUTIL D'USINAGE D'UNE MACHINE D'USINAGE ET DISPOSITIF DE MESURE

(30) Priorität: 23.11.2016 DE 102016223199
(43) Veröffentlichungstag der Anmeldung: 02.10.2019
(73) Patentinhaber: Schaeffler Technologies AG & Co. KG, 91074 Herzogenaurach (DE)
(72) Erfinder: DAUT, Klaus, 91074 Herzogenaurach (DE)
(86) Internationale Anmeldenummer: PCT/DE2017/100978
(87) Internationale Veröffentlichungsnummer: WO 2018/095472

(56) Entgegenhaltungen:
- EP-A1- 2 735 400
- EP-A2- 1 650 540
- WO-A1-2006/067398
- DE-A1-102007 005 222
- DE-A1-102014 204 025
- US-A1- 2009 234 490

## Beschreibung

Die Erfindung betrifft einen Werkzeughalter für ein Bearbeitungswerkzeug einer Bearbeitungsmaschine und eine Messeinrichtung für den Werkzeughalter.

Werkzeughalter sind genormte Katalogteile, welche größenspezifisch geordert werden können.

Aus der Praxis ist es bekannt, Bearbeitungskräfte an Werkzeughaltern zu überwachen, also Kräfte, denen der Werkzeughalter während seines Betriebs in der Bearbeitungsmaschine ausgesetzt ist. Hierzu ist die Verwendung von Dehnmessstreifen (DMS) oder Kraftmessdosen oder die Überwachung von Vorschubspindeln der Bearbeitungsmaschine bekannt.

Aus der DE 10 2011 011 773 A1 ist ein Werkzeughalter mit einer Messnabe, bestehend aus einem im Wesentlichen zylindrischen Hauptkörper und einer am Hauptkörper angeordneten Messeinrichtung bekannt, wobei an den sich gegenüberliegenden Stirnseiten der Messnabe einerseits eine werkzeugseitige Futteraufnahme und andererseits eine maschinenspindelseitige Aufnahme befestigbar ist und die Messnabe als Adapter bzw. Zwischenstück zwischen diese zwischengefügt ist. An den sich gegenüberliegenden Stirnseiten des Hauptkörpers sind Halteelemente lösbar befestigt, die Befestigungsstellen zur lösbaren Befestigung verschiedener werkzeugseitiger Futteraufnahmen und maschinenspindelseitiger Aufnahmen tragen.

Aus der DE 196 32 148 A1 ist ein Maschinenwerkzeug für die spanabhebende Metallbearbeitung mit einem kontinuierlich arbeitenden System zur Werkzeugüberwachung bekannt, bei dem die Prozessgrößen messtechnisch erfasst, ausgewertet und zur unmittelbaren Prozesssteuerung umgesetzt werden. Dabei erfolgt eine Anordnung eines kombinierten, oder mehrerer einzelner Kraft-, Temperatur- und Beschleunigungssensoren an sensibler Stelle und unmittelbar im Bereich der Stützfläche des Werkzeughalters für den Schneidkörper zur gleichzeitigen Erfassung der Messdaten, wobei im Werkzeughalter die Signalauswerteeinheit zur Verarbeitung der Signaldaten angeordnet ist, um die berechneten und verstärkten Stell- bzw. Steuersignale einem ebenfalls im Werkzeughalter angeordneten Aktor zuzuleiten.

Die DE 10 2007 005 222 A1 beschreibt den Einsatz von piezoelektrischen Wandlern zur Regelung einer spanabhebenden Werkstückbearbeitung. Sie stellt die Basis für den Oberbegriff des Anspruchs 1 dar.

Die EP 2 735 400 A1 offenbart eine Anordnung zur Steuerung eines rotierenden Zerspanungsprozesses und ein Schneidwerkzeug dafür. Dabei ist ein Überwachungssystem mit mindestens einem akustischen Oberflächenwellensensor vorgesehen. An dem Schneidwerkzeug ist mindestens eine Antenne angebracht.

Die US 2009 / 0 234 490 A1 beschreibt einen intelligenten Werkzeughalter zur Verwendung mit einer Werkzeugmaschinenplattform. Der Werkzeughalter umfasst einen Körper, einen mit dem Körper angeordneten Prozessor und einen mit dem Prozessor kommunizierenden Sende-Empfänger.

Die WO 2006 / 067 398 A1 offenbart ein Verfahren zur Steuerung einer Werkzeugmaschine. Dabei kommt ein Schneidwerkzeug zum Einsatz, das eine Sensorvorrichtung umfasst.

Die EP 1 650 540 A2 beschreibt ein Sensorsystem für eine spanabhebende Werkzeugmaschine mit einer Energieversorgungseinheit, die aus einem magnetischen Wechselfeld induktiv Energie zur Versorgung einer Sensoreinrichtung bereitstellt.

Die DE 10 2014 204 025 A1 beschreibt ein Bauteil mit einer Materialausnehmung und einem, wenigstens einem Sensor aufweisenden Messelement, das kraftschlüssig in die Materialausnehmung eingepasst ist.

Aufgabe der Erfindung ist es, die Messung von Bearbeitungskräften an Werkzeughaltern zu verbessern.

Die Aufgabe wird gelöst durch einen Werkzeughalter gemäß Patentanspruch 1. Bevorzugte oder vorteilhafte Ausführungsformen der Erfindung sowie anderer Erfindungskategorien ergeben sich aus den weiteren Ansprüchen, der nachfolgenden Beschreibung sowie den beigefügten Figuren.

Der Werkzeughalter ist ein Werkzeughalter für ein Bearbeitungswerkzeug einer Bearbeitungsmaschine. In einem bestimmungsgemäßen Bearbeitungszustand ist der Werkzeughalter entlang eines Kraftpfades mit einer Bearbeitungskraft beaufschlagt. Der bestimmungsgemäße Bearbeitungszustand ist derjenige, wenn der Werkzeughalter gemäß seiner Entwurfs- bzw. Einsatzvorgaben in einer hierfür vorgesehenen Bearbeitungsmaschine betrieben wird und ein hierfür bestimmtes zu haltendes Bearbeitungswerkzeug, beispielsweise eine Wendeschneidplatte, wie vorgesehen im Werkzeughalter gehalten ist.

Der Werkzeughalter ist dabei insbesondere in Bezug auf dessen Halterung in der Werkzeugmaschine und der Aufnahme für ein Werkzeug einstückig bzw. durchgängig ausgeführt. Ein in der Bearbeitungsmaschine einspannbaren Abschnitt und ein das Werkzeug tragender Abschnitt des Werkzeughalters sind also einstückig durchverbunden bzw. ist die gesamte entsprechende Struktur aus durchgängigem (Voll-)material gebildet.

Der Werkzeughalter enthält mindestens einen Kraftaufnehmer. Der Kraftaufnehmer ist messtechnisch am Kraftpfad angekoppelt. Die Ankopplung dient zur Erfassung einer Messgröße. Die Messgröße ist mit der Bearbeitungskraft korreliert. Die Korrelation besteht insbesondere darin, dass ein Großteil der Bearbeitungskraft vom Kraftaufnehmer aufgenommen wird. Insbesondere ist bekanntermaßen (zum Beispiel durch Simulation oder Versuche) die Messgröße proportional zur tatsächlichen Bearbeitungskraft. So kann zumindest ein relativer, insbesondere ein absoluter Wert der Bearbeitungskraft aus dem Messwert rückgerechnet oder rückermittelt werden. Der Werkzeughalter enthält mindestens ein Kommunikationselement. Das Kommunikationselement ist mit dem Kraftaufnehmer verbunden bzw. ist jeder Kraftaufnehmer mit mindestens einem Kommunikationselement verbunden. Die Verbindung dient der Übertragung der Messgröße vom Kraftaufnehmer an das Kommunikationselement. Insbesondere dient die Verbindung auch einer Energieversorgung des Kraftaufnehmers. Das Kommunikationselement ist zur Übertragung der Messgröße an eine Gegenstelle ausgebildet.

Weiterhin ist der Kraftaufnehmer im Inneren des Werkzeughalters in einer in den Werkzeughalter eingebrachten Ausnehmung angeordnet und als ein Passelement für die Ausnehmung in Form eines Kraftmessbolzens ausgeführt, wobei der Kraftmessbolzen passgenau in eine Bohrung als Ausnehmung eingepresst ist, wobei der Werkzeughalter eine Energiequelle zur Versorgung des Kraftaufnehmers und/oder des Kommunikationselements mit Energie enthält, und wobei die Energiequelle ein Energy-Harvesting-Modul zur Energiegewinnung enthält, welche Energie aus einer Drehung und/oder Beschleunigung und/oder Reibung und/oder Licht aus dem Betrieb der Bearbeitungsmaschine stammt.

Gemäß der Erfindung ergibt sich ein sensorisierter Werkzeughalter, welcher einen eigenen, d.h. integrierten, Kraftaufnehmer enthält, um die Kraft (zumindest eine damit korrelierte Messgröße) im Kraftpfad zu messen, mit welcher der Werkzeughalter im Messzeitpunkt belastet ist. Der Kraftaufnehmer ist insbesondere ein sogenannter SENSOTECT^{®1}-Kraftaufnehmer, d.h. dieser kann eine derartige Beschichtung enthalten oder aus einer solchen bestehen ("SENSOTECT" ist eine eingetragene Marke der Schaeffler Technologies AG & Co. KG, 91074 Herzogenaurach, Deutschland).

Die Übertragung der Messgröße an die Gegenstelle ist insbesondere drahtlos ausgebildet. Durch die kombinierte Mess- und Kommunikationseinheit ergibt sich der Vorteil, jederzeit bzw. dauerhaft Aussagen über die aktuell am Bearbeitungswerkzeug vorhandene Bearbeitungskraft an der Maschine zur Verfügung zu haben.

Da die Messgröße mit der Bearbeitungskraft korreliert ist, kann von der Messgröße auf die aktuell gemessene Bearbeitungskraft rückgeschlossen werden.

Über die bekannte Bearbeitungskraft können verschiedene Rückschlüsse gezogen werden. Wenn beispielsweise das Bearbeitungswerkzeug (Schneidstoff) verschleißt verändern sich die Schnittkräfte und damit die Bearbeitungskraft. Eine Steuerung der Bearbeitungsmaschine, welche über die Gegenstelle über die Messgröße und damit über die Bearbeitungskraft informiert ist, kann nun die Maschine anhalten und den Bediener zum Wechsel des Bearbeitungswerkzeugs, z.B. einer Wendeplatte, auffordern.

Erfindungsgemäß enthält der Werkzeughalter eine Energiequelle zur Versorgung des Kraftaufnehmers und/oder des Kommunikationselements. Die Energiequelle ist eine Batterie oder ein Akkumulator oder ein auf induktivem oder kapazitivem Prinzip funktionierender (drahtloser) Energieempfänger. Insbesondere ist die Energiequelle in das Kommunikationselement integriert bzw. mit diesem zu einer baulichen Einheit kombiniert. So steht im Werkzeughalter Energie zur Versorgung der elektrischen Verbraucher, insbesondere Kraftaufnehmer und/oder Kommunikationselement, für deren Betrieb zur Verfügung.

Erfindungsgemäß enthält die Energiequelle ein Energy-Harvesting-Modul. "Energy-Harvesting" ist ein bekanntes Vorgehen und soll hier nicht weiter erläutert werden, da dieses mannigfaltige Möglichkeiten zur Energiegewinnung bietet. Lediglich beispielhaft sei die Energiegewinnung aus Drehung, Beschleunigung, Reibung, Licht usw. genannt. Es ergeben sich die üblichen Vorteile von Energy-Harvesting-Systemen wie z.B. Wartungsfreiheit, Drahtlosigkeit usw.

In einer bevorzugten Ausführungsform ist das Kommunikationselement im Inneren des (insbesondere einstückigen kraftübertragenden Teils des) Werkzeughalters angeordnet. Bevorzugt ist alternativ oder zusätzlich auch die Energiequelle im Inneren des Werkzeughalters angeordnet, insbesondere wenn diese wie oben erwähnt mit dem Kommunikationsmodul kombiniert ist. Die Anordnung im Inneren erfolgt zum Beispiel durch Aufnahme in einem Hohlraum des Werkzeughalters. Der Hohlraum ist insbesondere nach außen hin abgedichtet, sodass die im Inneren des Werkzeughalters angeordneten Komponenten vor Umwelteinflüssen wie Spänen, Kühlmittel usw. geschützt sind.

In einer bevorzugten Ausführungsform ist das Kommunikationselement (und/oder die Energiequelle) in einer in den Werkzeughalter eingebrachten Ausnehmung angeordnet. Eine derartige Ausnehmung ist in der Regel in den Werkzeughalter einfacher einbringbar als ein Hohlraum. Die Ausnehmung ist insbesondere ein Sackloch bzw. eine Vertiefung, welche von der Oberfläche des Werkzeughalters aus zugänglich ist, insbesondere eine Bohrung. Die Ausnehmung für den Kraftaufnehmer ist vorzugsweise als Sackloch ausgebildet.

Insbesondere sind zwei Bohrungen am Werkzeughalter angebracht, wobei in einer Bohrung der Kraftaufnehmer und in der anderen Bohrung das Kommunikationselement, optional mit Energiequelle, untergebracht ist. Insbesondere sind beide Bohrungen durch eine Rinne bzw. Nut in der Oberfläche des Werkzeughalters verbunden. Kabel zur kabelgebundenen Verbindung von Kraftaufnehmer und Kommunikationselement bzw. Energiequelle verlaufen dann in dieser Rinne. Diese Rinne kann insbesondere nach Aufnahme des Kabels versiegelt werden, z.B. mit einer Vergussmasse. Gleiches gilt für die Ausnehmungen. Sobald Kraftaufnehmer, Kommunikationselement usw. in den Ausnehmungen aufgenommen sind, können auch diese versiegelt werden. Durch die Versiegelung werden die entsprechenden Teile vor Beschädigung und Umwelteinflüssen geschützt.

Die Ausnehmung für den Kraftsensor befindet sich insbesondere an einer Stelle des Werkzeughalters, die vom Kraftpfad oder einem Großteil des Kraftpfades durchlaufen wäre, wenn die Ausnehmung nicht vorhanden wäre. Mit anderen Worten wird im Werkzeughalter ein Bereich des einstückigen bzw. Vollmaterials gesucht, welcher vom Kraftpfad durchlaufen ist. Dort wird die entsprechende Ausnehmung für den Kraftsensor eingebracht. So kann der Kraftsensor im Kraftpfad eingebracht werden. Die Ausnehmung für das Kommunikationselement wird dagegen insbesondere dort angebracht, wo möglichst kein oder wenig Kraftpfad verläuft. So stört diese Ausnehmung den Kraftpfad nicht bzw. schwächt das Bauteil an der Stelle des Kraftpfades nicht.

Erfindungsgemäß ist der Kraftaufnehmer als Passelement für die Ausnehmung ausgeführt. Die Passung des Passelements ist insbesondere so ausgeführt, dass durch Einsetzen des Passelements der Kraftpfad durch die Ausnehmung hindurch und durch das Passelement hindurch zumindest teilweise wieder so geschlossen ist, wie es bei Vollmaterial wäre. Somit verläuft der Kraftpfad durch den Kraftaufnehmer hindurch. Der Kraftaufnehmer ist als Kraftmessbolzen ausgeführt, welcher passgenau in eine entsprechende Bohrung als Ausnehmung einpressbar ist. So sitzt der Kraftaufnehmer möglichst gut im Kraftpfad und der Kraftpfad ist an dieser Stelle auch wieder geschlossen und dient der Kraftübertragung.

In einer bevorzugten Ausführungsform ist der Kraftaufnehmer im Bereich eines bestimmungsgemäßen Krafteinleitungspunktes des Werkzeughalters angeordnet. "Punkt" ist hier weit zu verstehen: Es kann auch ein linien- oder flächenhafter Krafteinleitungsbereich sein. Der Krafteinleitungspunkt bezieht sich wieder auf den bestimmungsgemäßen Bearbeitungszustand bzw. Betriebszustand des Werkzeughalters. Am Krafteinleitungspunkt oder in dessen Bereich ist der Kraftpfad am konzentriertesten, weshalb ein dort platzierter Kraftaufnehmer möglichst viel der tatsächlich wirkenden Kraft aufnehmen kann. Die vom Kraftaufnehmer erzeugte Messgröße weist damit möglichst große Amplitude auf und ist besonders gut mit der tatsächlich durch den Werkzeughalter übertragenen Bearbeitungskraft korreliert.

In einer bevorzugten Ausführungsform ist der Werkzeughalter ein Werkzeughalter zur Aufnahme eines Drehwerkzeugs als Bearbeitungswerkzeug. Derartige Bauteile sind besonders üblich bzw. weit verbreitet und können gemäß der Erfindung als überwachte Werkzeughalter dienen.

In einer bevorzugten Ausführungsform ist der Kraftaufnehmer im Bereich eines krafteinleitenden Aufnahmebereiches für das Bearbeitungswerkzeug angeordnet. Insbesondere ist der Aufnahmebereich ein Aufnahmebereich für ein Drehwerkzeug, insbesondere für eine Wendeschneidplatte. Der beschriebene Ort am Werkzeughalter ist der, an dem im bestimmungsgemäßen Betrieb jeweils ein krafteinleitendes Element angreift, z.B. eine Anlagefläche eines Drehwerkzeugs oder einer Wendeschneidplatte. Die Aufgabe der Erfindung wird auch gelöst durch eine Messeinrichtung gemäß

Patentanspruch 8. Die Messeinrichtung ist eine Messeinrichtung für eine Bearbeitungsmaschine. Die Messeinrichtung enthält mindestens einen erfindungsgemäßen Werkzeughalter. Die Messeinrichtung enthält auch die Gegenstelle zum Empfang der von einem oder mehreren Kommunikationselementen übertragenen Messgrößen. Eine derartige Gegenstelle ist insbesondere in der Bearbeitungsmaschine ortsfest installierbar. Die Messeinrichtung und zumindest ein Teil deren Ausführungsformen sowie die jeweiligen Vorteile wurden sinngemäß bereits im Zusammenhang mit dem erfindungsgemäßen Werkzeughalter erläutert. Die Erfindung beruht auf folgenden Erkenntnissen, Beobachtungen bzw. Überlegungen, wobei in diesem Zusammenhang als "Erfindung" auch Ausführungsformen der Erfindung genannt sind, die Teilen oder Kombinationen der oben genannten Ausführungsformen entsprechen und/oder gegebenenfalls auch bisher nicht erwähnte Ausführungsformen einschließen.

Wenn die Bearbeitungskräfte an einem Werkzeughalter überwacht werden sollen, wäre es möglich, Dehnmessstreifen (DMS) auf den Halter aufzukleben und die Kabel dann (z.B. quer durch die Maschine) nach außen zu einem PC zu führen. Diese Methode ist für einen Großserieneinsatz nicht durchführbar bzw. praktikabel.

Eine weitere Möglichkeit wäre die Kontrolle der Schnittkräfte über eine Kraftmessdose. Diese wird dann zwischen Werkzeughalter und Grundhalter gespannt. Hierfür sind spezielle Grundhalter zu konstruieren. Aber auch bei dieser Methode sind Kabel aus der Maschine zu führen, was problematisch bei einer Maschine mit Werkzeugrevolver ist.

Eine weitere Möglichkeit wäre die Überwachung der Schnittkraft an der Vorschubspindel der Maschine. Diese Überwachung ist jedoch weit von der "Wirkstelle" entfernt. Reibungsverluste, Übersetzungsverhältnisse und Umlenkungen simplifizieren das Ergebnis so weit, dass eine gewünschte Genauigkeit in der Regel nicht erreichbar ist.

Im rauen Alltag einer Werkzeugmaschine werden Dehnmessstreifen durch Späne und Kühlmedium angegriffen.

Prinzipielles Ziel der Erfindung ist eine wirtschaftliche Überwachung der Schnittkräfte nach dem Industrie-4.0-Gedanken. Hierbei soll für jedes Werkzeug einer Bearbeitungsmaschine beim zerspanenden Bearbeitungsvorgang die Schnittkraft dokumentiert werden können. Es sollte bei der Erreichung einer Obergrenze der Schnittkraft eine Meldung oder ein Rückschluss auf den Zustand des Werkzeugs möglich sein. Der Signalfluss zwischen sensorisierten Werkzeugen und Software am Bildschirm der Maschine sollte so gestaltet werden, dass es zu keiner Beeinträchtigung beim Wechsel des Werkzeuges kommt. Die Signalabnehmer/Sender sollten so robust sein, dass keine Späne und keine Kühlmedien Störungen verursachen können. Es sollte eine Möglichkeit bestehen, die einzelnen Maschinen und Werkzeuge miteinander vergleichen zu können.

Gemäß der Erfindung wird ein (bekannter, üblicher) Werkzeughalter so modifiziert, dass jeweils ein Kraftaufnehmer, hier ein Kraftmessbolzen, sowie eine Energiequelle, enthaltend ein Energy-Harvesting-Modul, und ein Sendemodul aufgenommen werden kann. Dies wird erreicht, indem insbesondere an der Stirnseite des Werkzeughalters im Bereich unterhalb des Werkzeugs, insbesondere einer Wendeschneidplatte, der Kraftaufnehmer platziert wird, insbesondere zwei Bohrungen eingebracht werden.

Ein Kraftmessbolzen, insbesondere mit einer SENSOTECTO-Beschichtung, ist ein Standard-Teil. Er wird in eine der Bohrungen eingeschoben. Dieser Bolzen leitet die Signale in das Energy-Harvesting- und Sendemodul in der zweiten Bohrung weiter. Das Sendemodul befindet sich in einer Art Patrone und wird in die zweite Bohrung geschoben. Von hier aus nimmt das Modul insbesondere mittels RFID (oder Bluetooth) Kontakt zu einer Empfängerbox, welche sich im Inneren der Maschine befindet, auf. Diese Box ist fest mit der Steuerung verdrahtet. Die Signale werden dann in der CNC-Steuerung der Maschine interpretiert und verarbeitet. Die Sensorik ist so aufgebaut, dass sie nur senden kann. Wenn das Werkzeug (Schneidstoff) verschleißt, verändern sich die Schnittkräfte. Die Steuerung kann nun die Maschine anhalten und den Bediener zum Wechsel der Wendeplatte auffordern.

Die Kommunikation zwischen Kommunikationsmodul und Kraftaufnehmer bzw. Energiequelle wird klassisch über Kabel aufgebaut. Diese verschwinden in einem Steg, z.B. zwischen den Bohrungen. Der Steg wird im Anschluss versiegelt, insbesondere mit Kunststoff ausgegossen.

Der Kraftsensor, insbesondere die Bohrung für diesen, könnte auch von "unten" (gegenüber dem Bearbeitungswerkzeug) in den Halter gesetzt werden. Der Signalfluss über ein Kabel müsste dann gegebenenfalls über zwei Ebenen des Werkzeughalters verlegt werden.

Gemäß der Erfindung ergibt sich damit ein sensorisierter Werkzeughalter zur Aufnahme eines Bearbeitungswerkzeugs (z.B. Drehwerkzeugs), welcher in einer Bearbeitungsmaschine zum Einsatz kommt. Diese Werkzeughalter, insbesondere Wendeschneidplattenhalter, kommen in einer Bearbeitungsmaschine, vorzugsweise Drehmaschine, zum Einsatz. Werkzeughalter, insbesondere Wendeschneidplattenhalter, werden eingesetzt, um Produktionsteile zu bearbeiten. Üblicherweise werden diese als Fremdbezugsteile beschafft und in der Maschine eingesetzt. Diese Werkzeughalter sind genormt und werden täglich rund um den Globus zu Millionen eingesetzt. Die Erfindung kann damit in einem breiten Einsatzfeld genutzt werden.

Die Erfindung ist sinngemäß auf jeden anderen DIN-Halter, insbesondere alle Wendeschneidplattenhalter übertragbar.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen in einer schematischen Prinzipskizze:
- Figur 1: einen sensorisierten Werkzeughalter mit Wendeschneidplatte in Draufsicht,
- Figur 2: den Werkzeughalter aus Fig.1 in Frontansicht,
- Figur 3: einen Kraftmessbolzen.

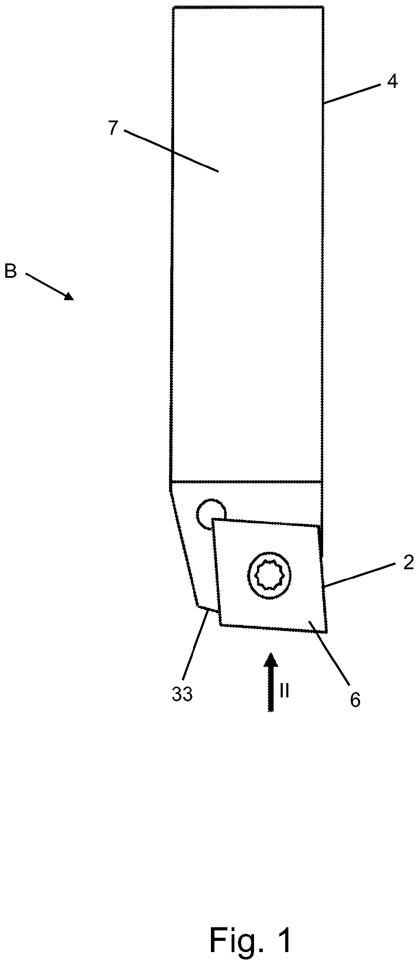

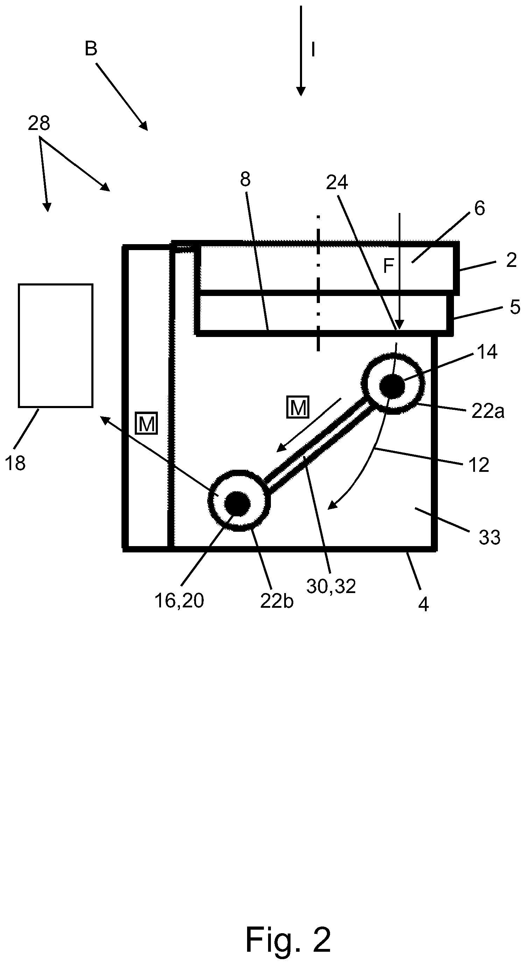

Figur 1 zeigt einen Werkzeughalter 4 in Form eines Wendeschneidplattenhalters in Draufsicht, Figur 2 zeigt dessen Frontansicht in Richtung des Pfeils II in Figur 1. Auf dem Werkzeughalter 4 ist unter Zwischenlage einer Unterlegplatte 5 ein Bearbeitungswerkzeug 2, hier eine Wendeschneidplatte, gehalten, nämlich mit einer nicht näher erläuterten Schraube fixiert. Der Werkzeughalter 4 ist in einer nicht dargestellten Bearbeitungsmaschine, hier einer Drehmaschine gehalten. Der Werkzeughalter 4 befindet sich in einem Bearbeitungszustand B, das heißt mit Hilfe des Werkzeughalters 4 und des Bearbeitungswerkzeugs 2 wird ein nicht dargestelltes Werkstück bearbeitet.

Bei der Bearbeitung des Werkstücks tritt eine Bearbeitungskraft F auf, die vom Werkstück in das Bearbeitungswerkzeug 2 bzw. dessen Bearbeitungsspitze 6 eingeleitet wird. Eine Gegenkraft in Form einer (eventuell abweichenden) Bearbeitungskraft F wird über einen nicht näher erläuterten Schaft 7 des Werkzeughalters 4 eingeleitet. Im Werkzeughalter 4 verläuft die Bearbeitungskraft F entlang eines Kraftpfades 12, der in Figur 2 nur symbolisch angedeutet ist.

Der Werkzeughalter 4 enthält einen Kraftaufnehmer 14. Der Kraftaufnehmer 14 ist messtechnisch am Kraftpfad 12 angekoppelt, um die Bearbeitungskraft F (bzw. einen bestimmten Proportionalanteil dieser) in Form einer symbolisch angedeuteten Messgröße M zu erfassen. Der Werkzeughalter 4 enthält auch ein Kommunikationselement 16, das mit dem Kraftaufnehmer 14 verbunden ist, um die Messgröße M vom Kraftaufnehmer 14 zum Kommunikationselement 16 zu übertragen. Das Kommunikationselement 16 ist dazu ausgebildet, die Messgröße M an eine Gegenstelle 18 zu übertragen. Diese Übertragung erfolgt drahtlos, hier mittels RFID.

Zum Betrieb des Kraftaufnehmers 14 und des Kommunikationselements 16 enthält letzteres eine Energiequelle 20 bzw. sind das Kommunikationselement 16 und die Energiequelle 20 zu einer baulichen Einheit kombiniert. Im Beispiel ist die Energiequelle 20 ein Energy-Harvesting-Modul, welches die Energie aus dem Betrieb der Bearbeitungsmaschine erhält.

Der Kraftaufnehmer 14 und das Kommunikationselement 16 (mit seiner Energiequelle 20) sind im Inneren des Werkzeughalters 4 angeordnet. Die Einbringung in das Innere des Werkzeughalters 4 erfolgt derart, dass in das Vollmaterial des Werkzeughalters 4 zwei Ausnehmungen 22a, 22b in Form von (Sacklock-) Bohrungen eingebracht wurden. In der Bohrung 22a sitzt der Kraftaufnehmer 14 passgenau ein. In der Ausnehmung 22b ist das Kommunikationselement 16 (mit Energiequelle 20) passgenau eingebracht. Der Kraftaufnehmer 14 ist hierbei als kraftschlüssig eingesetztes Passelement für die Ausnehmung 22a ausgeführt, das heißt dieser liegt so passgenau bzw. vorgespannt an den jeweiligen Innenwänden der Ausnehmung 22a an, dass eine Kraftübertragung entlang des Kraftpfades 12 (zumindest eines Teils) der Bearbeitungskraft F durch die Ausnehmung 22a hindurch über den Kraftaufnehmer 14 verläuft. So kann der Kraftaufnehmer 14 die jeweilige Bearbeitungskraft F bzw. deren Anteil in Form der Messgröße M erfassen und trägt gleichzeitig zur Kraftübertragung bei.

Der Kraftaufnehmer 14 bzw. die Ausnehmung 22a ist derart platziert, dass diese jeweils im Bereich eines bestimmungsgemäßen Krafteinleitungspunktes 24 des Werkzeughalters 4 angeordnet sind. Der Krafteinleitungspunkt 24 (bzw. Einleitungsfläche) ist im Beispiel eine Auflagefläche 8 am Werkzeughalter 4 für das Bearbeitungswerkzeug 2 (bzw. die Unterlegplatte 5).

Zusammen mit der Gegenstelle 18 bildet der Werkzeughalter 4 eine Messeinrichtung 28 für den Werkzeughalter 4 der Bearbeitungsmaschine. Die Gegenstelle 18 ist hierbei ortsfest in der Bearbeitungsmaschine installiert. Die Gegenstelle 18 dient also zum Empfang der vom Kommunikationselement 16 übertragenen Messgröße M.

Die Verbindung von Kraftaufnehmer 14 und Kommunikationselement 16 bzw. integrierter Energiequelle 20 erfolgt über eine Verbindungsleitung 30. Die Verbindungsleitung 30 ist in einer in die Oberfläche des Werkzeughalters 4 bzw. dessen Stirnfläche 33 eingebrachten Rinne 32 versenkt. Die Rinne 32 sowie die Ausnehmungen 22a, 22b sind nach Einbringung der betreffenden Elemente (Verbindungsleitung 30, Kraftaufnehmer 14, Kommunikationselement 16, Energiequelle 20) mit einem Siegelmaterial versiegelt, hier z.B. flächenbündig vergossen, um die Elemente vor Umwelteinflüssen, hier insbesondere Bearbeitungsspänen, Kühlmittel, Fett, Öl etc. zu schützen. Somit ist auch die Verbindungsleitung 30 ins Innere des Werkzeughalters 4 eingebracht.

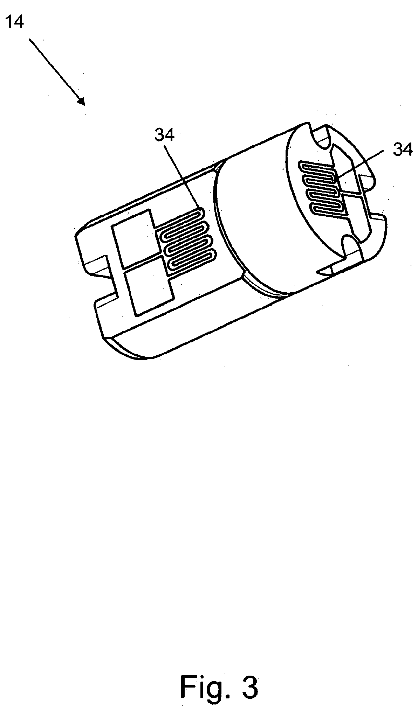

Figur 3 zeigt einen Kraftaufnehmer 14 zum passgenauen Einsetzen bzw. Einschlagen in die Ausnehmung 22a in Form einer Zylinderbohrung. Der Kraftaufnehmer enthält zwei Sensorstrukturen 34, hier jeweils eine SENSOTECT^{®}-Beschichtung zur eigentlichen Messung der Messgröße M.

### Bezugszeichenliste

- 2: Bearbeitungswerkzeug
- 4: Werkzeughalter
- 5: Unterlegplatte
- 6: Bearbeitungsspitze
- 7: Schaft
- 8: Auflagefläche
- 12: Kraftpfad
- 14: Kraftaufnehmer
- 16: Kommunikationselement
- 18: Gegenstelle
- 20: Energiequelle
- 22a, 22b: Ausnehmung
- 24: Krafteinleitungspunkt
- 28: Messeinrichtung
- 30: Verbindungsleitung
- 32: Rinne
- 33: Stirnfläche
- 34: Sensorstruktur
- F: Bearbeitungskraft
- B: Bearbeitungszustand
- M: Messgröße

## Patentansprüche

1. Werkzeughalter (4) für ein Bearbeitungswerkzeug (2) einer Bearbeitungsmaschine, wobei der Werkzeughalter (4) in einem bestimmungsgemäßen Bearbeitungszustand (B) mit einer Bearbeitungskraft (F) entlang eines Kraftpfades (12) beaufschlagt ist, wobei der Werkzeughalter (4) einen Kraftaufnehmer (14) enthält, der messtechnisch am Kraftpfad (12) zur Erfassung einer mit der Bearbeitungskraft (F) korrelierten Messgröße (M) angekoppelt ist, wobei der Werkzeughalter (4) ein Kommunikationselement (16) enthält, das mit dem Kraftaufnehmer (14) zur Übertragung der Messgröße (M) an das Kommunikationselement (16) verbunden ist, wobei das Kommunikationselement (16) zur Übertragung der Messgröße (M) an eine Gegenstelle (18) ausgebildet ist, wobei der Kraftaufnehmer (14) im Inneren des Werkzeughalters (4) in einer in den Werkzeughalter (4) eingebrachten Ausnehmung (22a, 22b) angeordnet ist, **dadurch gekennzeichnet, dass** der Kraftaufnehmer (14) als ein Passelement für die Ausnehmung (22a) in Form eines Kraftmessbolzens ausgeführt ist, wobei der Kraftmessbolzen passgenau in eine Bohrung als Ausnehmung (22a) eingepresst ist, wobei der Werkzeughalter (4) eine Energiequelle (20) in Form einer Batterie oder eines Akkumulators oder eines auf induktivem oder kapazitivem Prinzip funktionierenden Energieempfängers zur Versorgung des Kraftaufnehmers (14) und/oder des Kommunikationselements (16) mit Energie enthält, und wobei die Energiequelle (20) ein Energy-Harvesting-Modul zur Energiegewinnung enthält, welche Energie aus einer Drehung oder Beschleunigung oder Reibung oder Licht aus dem Betrieb der Bearbeitungsmaschine stammt.

2. Werkzeughalter (4) nach Anspruch 1, wobei das Kommunikationselement (16) im Inneren des Werkzeughalters (4) angeordnet ist.

3. Werkzeughalter (4) nach einem der vorhergehenden Ansprüche, wobei das Kommunikationselement (16) in einer in den Werkzeughalter (4) eingebrachten Ausnehmung (22b) angeordnet ist.

4. Werkzeughalter (4) nach einem der Ansprüche 1 bis 3, wobei die Ausnehmung (22a) für den Kraftaufnehmer (14) als Sackloch ausgeführt ist.

5. Werkzeughalter (4) nach einem der vorhergehenden Ansprüche, wobei der Kraftaufnehmer (14) im Bereich eines bestimmungsgemäßen Krafteinleitungspunktes (24) des Werkzeughalters (4) angeordnet ist.

6. Werkzeughalter (4) nach einem der vorhergehenden Ansprüche, wobei der Werkzeughalter (4) ein Werkzeughalter zur Aufnahme eines Drehwerkzeugs als Bearbeitungswerkzeug (2) ist.

7. Werkzeughalter (4) nach einem der vorhergehenden Ansprüche, wobei der Kraftaufnehmer (14) im Bereich eines krafteinleitenden Aufnahmebereiches (8) für das Bearbeitungswerkzeug (2) angeordnet ist.

8. Messeinrichtung (28) für eine Bearbeitungsmaschine, **dadurch gekennzeichnet, dass** die Messeinrichtung (28) mindestens einen Werkzeughalter (4) nach einem der vorhergehenden Ansprüche enthält, und die Messeinrichtung (28) die Gegenstelle (18) zum Empfang der vom Kommunikationselement (16) übertragenen Messgröße (M) enthält.

## Claims

1. A tool holder (4) for a machining tool (2) of a machine tool, wherein a machining force (F) acts on the tool holder (4) along a force path (12) in an intended machining state (B), wherein the tool holder (4) contains a force transducer (14), which is coupled metrologically to the force path (12) for capturing a measurement variable (M) correlated with the machining force (F), wherein the tool holder (4) contains a communication element (16), which is connected to the force transducer (14) for transmitting the measurement variable (M) to the communication element (16), wherein the communication element (16) is designed to transmit the measurement variable (M) to a remote station (18), wherein the force transducer (14) is arranged in the interior of the tool holder (4) in a recess (22a, 22b) introduced into the tool holder (4), **characterised in that** the force transducer (14) is designed as a fitting element for the recess (22a) in the form of a force-measuring pin, wherein the force-measuring pin is pressed into a bore as a recess (22a) in an accurately fitting manner, wherein the tool holder (4) contains an energy source (20) in the form of a battery or an accumulator or an energy receiver functioning on an inductive or capacitive principle for supplying the force transducer (14) and/or the communication element (16) with energy, and wherein the energy source (20) contains an energy harvesting module for energy recovery, which energy stems from a rotation or acceleration or friction or light from the operation of the machine tool.

2. The tool holder (4) according to claim 1, wherein the communication element (16) is arranged in the interior of the tool holder (4).

3. The tool holder (4) according to any one of the preceding claims, wherein the communication element (16) is arranged in a recess (22b) introduced into the tool holder (4).

4. The tool holder (4) according to any one of claims 1 to 3, wherein the recess (22a) for the force transducer (14) is designed as a blind hole.

5. The tool holder (4) according to any one of the preceding claims, wherein the force transducer (14) is arranged in the region of an intended force introduction point (24) of the tool holder (4).

6. The tool holder (4) according to any one of the preceding claims, wherein the tool holder (4) is a tool holder for receiving a rotary tool as a machining tool (2).

7. The tool holder (4) according to any one of the preceding claims, wherein the force transducer (14) is arranged in the region of a force-introducing receiving region (8) for the machining tool (2).

8. A measuring device (28) for a machine tool, **characterised in that** the measuring device (28) contains at least one tool holder (4) according to any one of the preceding claims, and the measuring device (28) contains the remote station (18) for receiving the measurement variable (M) transmitted by the communication element (16).

## Revendications

1. Porte-outil (4) pour outil d'usinage (2) d'une machine d'usinage, le porte-outil (4) étant soumis à une force d'usinage (F) le long d'un trajet de force (12) dans un état d'usinage (B) conforme à l'usage prévu, le porte-outil (4) contenant un capteur de force (14) qui est couplé métrologiquement au trajet de force (12) pour enregistrer une valeur mesurée (M) corrélée à la force d'usinage (F), le porte-outil (4) contenant un élément de communication (16) qui est relié au capteur de force (14) pour transmettre la valeur mesurée (M) à l'élément de communication (16), l'élément de communication (16) étant conçu pour transmettre la valeur mesurée (M) à un poste distant (18), le capteur de force (14) étant agencé à l'intérieur du porte-outil (4) dans un évidement (22a, 22b) ménagé dans le porte-outil (4), **caractérisé en ce que** le capteur de force (14) est réalisé sous la forme d'un élément d'ajustage pour l'évidement (22a) sous la forme d'un axe dynamométrique, l'axe dynamométrique étant enfoncé avec un ajustement précis dans un alésage servant d'évidement (22a), le porte-outil (4) contenant une source d'énergie (20) sous la forme d'une pile ou d'un accumulateur ou d'un récepteur d'énergie fonctionnant selon le principe inductif ou capacitif pour alimenter en énergie le capteur de force (14) et/ou l'élément de communication (16) et la source d'énergie (20) contenant un module de récupération d'énergie pour la production d'énergie, laquelle énergie provient d'une rotation ou d'une accélération ou d'un frottement ou de la lumière provenant du fonctionnement de la machine d'usinage.

2. Porte-outil (4) selon la revendication 1, dans lequel l'élément de communication (16) est agencé à l'intérieur du porte-outil (4).

3. Porte-outil (4) selon l'une quelconque des revendications précédentes, dans lequel l'élément de communication (16) est agencé dans un évidement (22b) ménagé dans le porte-outil (4).

4. Porte-outil (4) selon l'une quelconque des revendications 1 à 3, dans lequel l'évidement (22a) est réalisé sous forme de trou borgne pour le capteur de force (14).

5. Porte-outil (4) selon l'une quelconque des revendications précédentes, dans lequel le capteur de force (14) est agencé au niveau d'un point d'application de force (24) du porte-outil (4) conforme à l'usage prévu.

6. Porte-outil (4) selon l'une quelconque des revendications précédentes, le porte-outil (4) étant un porte-outil destiné à recevoir un outil de tournage en tant qu'outil d'usinage (2).

7. Porte-outil (4) selon l'une quelconque des revendications précédentes, dans lequel le capteur de force (14) est agencé au niveau d'une zone de réception (8) transmettant la force pour l'outil d'usinage (2).

8. Dispositif de mesure (28) pour une machine d'usinage, **caractérisé en ce que** le dispositif de mesure (28) contient au moins un porte-outil (4) selon l'une quelconque des revendications précédentes et le dispositif de mesure (28) contient le poste distant (18) pour recevoir la valeur mesurée (M) transmise par l'élément de communication (16).
